# EUROPÄISCHE PATENTSCHRIFT

(11) **EP 2 826 224 B1**
(45) Veröffentlichungstag und Bekanntmachung des Hinweises auf die Patenterteilung: **29.03.2017**
(21) Anmeldenummer: 12727130.2
(22) Anmeldetag: 31.05.2012
(51) Int. Cl.: G06F 9/54, H04L 12/18, H04L 29/06, H04L 29/08

(54) **ZUGRIFF VON CLIENTS AUF EINEN SERVERDIENST MITTELS EINER OPC-UA**
CLIENTS ACCESSING A SERVICE PROVIDED BY A SERVER USING OPC-UA
ACCÈS DE CLIENTS À UN SERVICE DE SERVEUR PAR OPC-UA

(43) Veröffentlichungstag der Anmeldung: 21.01.2015
(73) Patentinhaber: Siemens Aktiengesellschaft, 80333 München (DE)
(72) Erfinder: VOLKMANN, Frank, 90475 Nürnberg (DE); ERLMANN, Markus, 95336 Mainleus (DE); HOCK, Christian, 90763 Fürth (DE)
(86) Internationale Anmeldenummer: PCT/EP2012/060260
(87) Internationale Veröffentlichungsnummer: WO 2013/178270

(56) Entgegenhaltungen:
- WO-A2-2004/003735
- OPC FOUNDATION: "OPC Alarms and Events", OPC: OLE FOR PROCESS CONTROL, 2. November 1999 (1999-11-02), XP002295924,
- STEFAN-HELMUT LEITNER ET AL: "OPC UA Service-oriented Architecture for Industrial Applications", GEMEINSAMER WORKSHOP DER FACHGRUPPEN OBJEKTORIENTIERTE SOFTWAREENTWICKLUNG (OOSE), SOFTWARE-REENGINEERING (SRE) UND SOFTWARE-ARCHITEKTUREN (SW-ARCH) AM 27. OKTOBER 2006 IN LADENBURG, , 27. Oktober 2006 (2006-10-27), XP007909798, Gefunden im Internet: URL:http://pi.informatik.uni-siegen.de/stt /26_4/01_Fachgruppenberichte/ORA2006/01_OR A2006-Bericht.pdf [gefunden am 2009-09-16]
- PAUL T MYRDA ET AL: "Recommended Approach to a NASPInet Architecture", 45TH IEEE HAWAII INTERNATIONAL CONFERENCE ON SYSTEM SCIENCE (HICSS), 4. Januar 2012 (2012-01-04), Seiten 2072-2081, XP032113903, DOI: 10.1109/HICSS.2012.496 ISBN: 978-1-4577-1925-7

## Beschreibung

Die Erfindung betrifft ein Verfahren zum Zugriff von Clients auf einen Serverdienst eines Servers in einem Netzwerk mittels einer OPC-UA.

OPC-UA (= OPC Unified Architecture) ist ein Kommunikationsprotokoll und Informationsmodell zur Kommunikation unterschiedlicher automatisierungstechnischer Komponenten (Geräte), siehe http://www.opcfoundation.org.

Bei OPC-UA finden alle Kommunikationsbeziehungen bilateral zwischen zwei Endpoints statt. Dabei baut ein OPC-UA Client einen Kommunikationskanal zu einem OPC-UA Server auf, und die gesamte Kommunikation der beiden findet in diesem Kanal statt. Insbesondere gilt dies für alle Lese- und Schreibzugriffe, was somit auch die so genannten Subscriptions einschließt, bei denen Clients Wertänderungen von Variablen mitgeteilt werden.

In der Praxis tritt häufig der Fall auf, dass mehrere Clients an denselben Informationen eines Servers Interesse haben. Bei OPC-UA baut dann jeder der Clients eine bilaterale Kommunikaion zum Server auf und fragt dieselben Werte wie die anderen Clients ab. Beispiele, in denen ein solcher Fall auftritt, sind mehrere HMI-Geräte (HMI = Human Machine Interface), die dieselbe Sicht auf einen Serverzustand zeigen, Historian-Anwendungen, Logging, Zustandüberwachung und eine parallele KPI-Erstellung (KPI = Key Performance Indikator).
Aus der WO 2004/003735 A2 ist bereits ein solches Verfahren für OPC, den Vorgänger von OPC-UA, bekannt.

Der Erfindung liegt die Aufgabe zugrunde, ein verbessertes Verfahren zum Zugriff von Clients auf einen den Clients veränderliche Werte wenigstens einer Variable bereitstellenden Serverdienst eines Servers in einem Netzwerk mittels einer zugrunde, Hardware zur Durchführung des verbesserten Verfahrens anzugeben.

Die Aufgabe wird erfindungsgemäß hinsichtlich des Verfahrens durch die Merkmale des Anspruchs 1 und hinsichtlich der Hardware durch die Merkmale der Ansprüche 8 bis 10 gelöst.

Vorteilhafte Ausgestaltungen der Erfindung sind Gegenstand der Unteransprüche.

Bei dem erfindungsgemäßen Verfahren zum Zugriff von Clients auf einen den Clients veränderliche Werte wenigstens einer Variable bereitstellenden Serverdienst eines Servers in einem Netzwerk mittels einer OPC-UA meldet sich ein Client für den Serverdienst an, indem er eine Subscription-Anmeldung für den Serverdienst an den Server sendet. Der Server legt für den Serverdienst eine Subscription-Struktur mit einer eindeutigen Subscription-ID, d.h. einem eindeutigen Identifikator, und eine dieser Subscription-Struktur zugeordnete TCP/IP-Multicastgruppe (TCP = Transmission Control Protocol, IP = Internet Protocol) mit einer eindeutigen Multicastadresse an und teilt jedem sich durch eine Subscription-Anmeldung für den Serverdienst anmeldenden Client die Multicastadresse und die Subscription-ID mit. Der Server sendet jede Wertänderung des Wertes jeder Variable des Serverdienstes mittels einer Multicastnachricht über das Netzwerk an die Multicastadresse, so dass alle für den Serverdienst angemeldeten Clients dieselbe Multicastnachricht empfangen.

Dabei werden von dem Server für verschiedene angefragte derartige Serverdienste (Subscriptions), d.h. für Serverdienste mit verschiedenen Variablen, jeweils eine separate Subscription-Struktur und eine separate TCP/IP-Multicastgruppe angelegt, wobei sich die Subscription-IDs und Multicastadressen verschiedener Serverdienste voneinander unterscheiden.

Dabei sind hier und im Folgenden unter Clients stets OPC-UA Clients und unter Servern stets OPC-UA Server zu verstehen.

Das erfindungsgemäße Verfahren erweitert die herkömmliche OPC-UA Spezifikation bezüglich der in OPC-UA als Subscriptions bezeichneten Serverdienste, bei denen Clients Wertänderungen von Variablen mitgeteilt werden, die von einem Server zur Verfügung gestellt werden und für die sich die Clients beim Server anmelden. Der Server richtet dabei erfindungsgemäß für verschiedene Clients, die sich für dieselbe Subscription, d.h. für dieselben Variablen, anmelden, eine Multicastgruppe ein und sendet Wertänderungen dieser Variablen jeweils in Form einer Multicastnachricht an die Multicastgruppe, so dass alle für die jeweilige Subscription angemeldeten Clients dieselbe Multicastnachricht erhalten.

Der Server teilt also eine Wertänderung einer Variable allen angemeldeten Clients mittels einer einzigen Multicastnachricht mit, während er bei dem herkömmlichen OPC-UA jedem angemeldeten Client auf dessen Anfrage (d.h. auf einen so genannten "Polled Refresh Request", mittels dessen der Client den Wert einer oder mehrerer Variablen beim Server abfragt) eine separate Nachricht sendet. Dies reduziert vorteilhaft die Auslastung des Servers und des Netzwerkes und steigert die Effizienz von Subscriptions gegenüber dem herkömmlichen OPC-UA.

Insbesondere können die Polled Refresh Requests der bei dem Serverdienst angemeldeten Clients für die Variablen des Serverdienstes entfallen, d.h. diese Clients brauchen nicht mehr beim Server die aktuellen Werte von Variablen abzufragen, da der Server Wertänderungen der Variablen eines Serverdienstes mittels der Multicastnachrichten automatisch und gleichzeitig allen für den Serverdienst angemeldeten Client mitteilt.

Applikationen eines Client, die Polled Refresh Requests für Variablen des Serverdienstes erzeugen, brauchen dennoch gegenüber dem herkömmlichen OPC-UA nicht geändert werden, da diese Polled Refresh Requests vom OPC-UA Kommunikationsstack des Client erkannt und abgefangen werden können, so dass sie dem Server nicht zugestellt werden. Die OPC-UA Kommunikationsstacks der Clients sind daher vorzugsweise zum Erkennen und Abfangen derartiger von Applikationen des Client erzeugten Polled Refresh Requests ausgebildet.

Außerdem ermöglicht die Erfindung, OPC-UA an Stellen einzusetzen, wo dies mit herkömmlichen OPC-Subscriptions nicht möglich ist, z.B. in einigen Fällen, die heute nur mit getakteter Kommunikation realisierbar sind, da das automatische Versenden der Multicastnachrichten durch den Server der entsprechenden Taktung angepasst werden kann.

In einer bevorzugten Ausgestaltung der Erfindung sind die von dem Server gesendeten Multicastnachrichten UDP-Telegramme (UDP = User Datagram Protocol).

Das UDP ist ein einfaches und verbindungsloses Netzwerkprotokoll und eignet sich dadurch besonders vorteilhaft zur einfachen und schnellen Übertragung von Multicastnachrichten.

Eine weitere bevorzugte Ausgestaltung der Erfindung sieht vor, dass zur Anmeldung eines Client für den Serverdienst der OPC-UA Kommunikationsstack des Client in die zum Server gesendeten Anmeldedaten ein Datum einfügt, das den Client als Multicast-Subscriptions unterstützenden Client ausweist.

Durch das Datum kann dem Server die Bereitschaft eines Client zum Beitritt zu einer Multicastgruppe mitgeteilt werden. Die Einfügung des Datums durch den OPC-UA Kommunikationsstack des Client ist vorteilhaft, da das erfindungsgemäße Subscription-Verfahren dadurch für Applikationen des Client transparent bleiben kann, so dass diese Applikationen gegenüber dem herkömmlichen OPC-UA nicht geändert werden brauchen. Die erfindungsgemäße Erweiterung des OPC-UA kann dadurch auf Clientseite auf eine Erweiterung der Funktionalität dessen OPC-UA Kommunikationsstack beschränkt werden.

Vorzugsweise erzeugt der Server ferner die Subscription-Struktur und die TCP/IP-Multicastgruppe nach dem erstmaligen Empfangen einer Subscription-Anmeldung für den Serverdienst.

Dadurch werden die Subscription-Struktur und die TCP/IP-Multicastgruppe bedarfsweise erzeugt. Dies ist vorteilhaft, da im Allgemeinen nicht vorhersehbar ist, welche Subscriptions von den Clients angefragt werden, und insbesondere keine unnötigen Subscription-Struktur und die TCP/IP-Multicastgruppe angelegt werden.

Weiterhin überprüft der Server vorzugsweise nach dem Erhalt einer Subscription-Anmeldung eines Client für den Serverdienst, ob für den Serverdienst bereits eine Subscription-Struktur existiert, und legt eine Subscription-Struktur für den Serverdienst nur in dem Falle an, dass noch keine Subscription-Struktur für den Serverdienst existiert.

Auf diese Weise wird vorteilhaft vermieden, dass Subscription-Strukturen mehrfach angelegt werden und der Server und das Netzwerk unnötig belastet werden.

In einer weiteren Ausgestaltung der Erfindung wird die Multicastnachricht mehrfach von dem Server gesendet.

Dies ist vor allem dann vorteilhaft, wenn die Multicastnachrichten ungesichert übertragen werden, wobei der Verlust einzelner Multicastnachrichten akzeptiert und nicht überprüft wird. Die mehrfache Versendung einer Multicastnachricht kann in solchen Fällen die Sicherheit der Zustellung der Multicastnachricht vorteilhaft erhöhen.

Eine weitere Ausgestaltung der Erfindung sieht vor, dass die Menge der Variablen des Serverdienstes vom Server als Vereinigungsmenge aus Variablen gebildet wird, die in von dem Server empfangenen Subscription-Anmeldungen verschiedener Clients enthalten sind.

Dadurch kann vorteilhaft berücksichtigt werden, dass im Allgemeinen verschiedene Clients nicht genau dieselben Subscriptions anfordern. Subscriptions, die sich nur wenig (hinsichtlich weniger Variablen) unterscheiden, können dabei durch die Bildung der Vereinigungsmenge von Variablen zusammengefasst werden, sodass für sie eine gemeinsame Subscription-Struktur und Multicastgruppe angelegt werden. Dabei wird vorzugsweise ein Grad von Übereinstimmung verschiedener Subscriptions festgelegt, bis zu dem diese Subscriptions zusammengefasst werden bzw. oberhalb dessen eine neue Subscription-Struktur und eine neue Multicastgruppe angelegt werden.

Erfindungsgemäße Hardware ist zur Durchführung des erfindungsgemäßen Verfahrens mit den oben genannten Vorteilen ausgebildet.

Ein erfindungsgemäßer Client weist dementsprechend einen OPC-UA Kommunikationsstack auf, der dazu ausgebildet ist, in zum Server gesendete Anmeldedaten zur Anmeldung des Client für den Serverdienst ein Datum einzufügen, das den Client als Multicast-Subscriptions unterstützenden Client ausweist.

Ein erfindungsgemäßer Server weist einen OPC-UA Serverstack auf, der dazu ausgebildet ist, für den Serverdienst eine Subscription-Struktur mit einer eindeutigen Subscription-ID und eine dieser Subscription-Struktur zugeordnete TCP/IP-Multicastgruppe mit einer eindeutigen Multicastadresse anzulegen, jedem sich durch eine Subscription-Anmeldung für den Serverdienst anmeldenden Client die Multicastadresse und die Subscription-ID mitzuteilen und jede Wertänderung des Wertes jeder Variablen des Serverdienstes mittels einer Multicastnachricht über das Netzwerk an die Multicastadresse zu senden.

Erfindungsgemäße OPC-UA Clients und Server unterscheiden sich also von herkömmlichen OPC-UA Clients und Servern lediglich durch Zusatzfunktionen ihrer OPC-UA Kommunikationsstacks. Dies hat die Vorteile, dass die Zusatzfunktionen für herkömmliche OPC-UA Clients und Server vollständig abwärtskompatibel und transparent sind und Applikationen von Clients und Servern gegenüber dem herkömmlichen OPC-UA nicht geändert werden brauchen.

Ein erfindungsgemäßes Netzwerk umfasst wenigstens einen erfindungsgemäßen Client und wenigstens einen erfindungsgemäßen Server.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine Anmeldung mehrerer Clients zu einem Serverdienst eines Servers in einem Netzwerk mittels einer OPC-UA gemäß dem Stand der Technik,
- FIG 2: eine Mitteilung einer Wertänderung einer Variablen an zu einem Serverdienst angemeldete Clients in einem Netzwerk mittels einer OPC-UA gemäß dem Stand der Technik,
- FIG 3: eine Anmeldung mehrerer Clients zu einem Serverdienst eines Servers in einem Netzwerk mittels einer OPC-UA gemäß dem erfindungsgemäßen Verfahren, und
- FIG 4: eine Mitteilung einer Wertänderung einer Variablen an zu einem Serverdienst angemeldete Clients in einem Netzwerk mittels einer OPC-UA gemäß dem erfindungsgemäßen Verfahren.

Einander entsprechende Teile sind in allen Figuren mit den gleichen Bezugszeichen versehen.

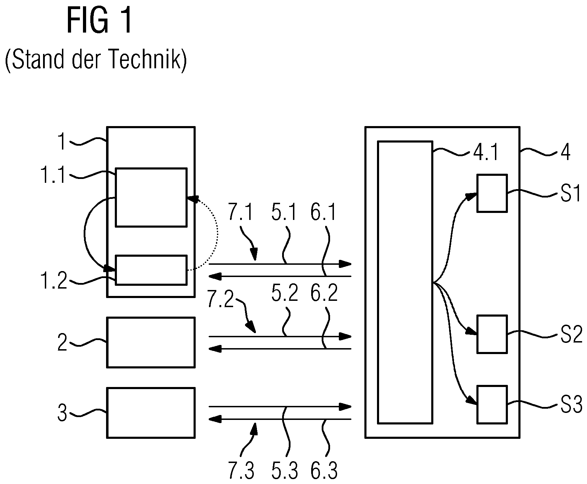

Figur 1 zeigt eine Anmeldung mehrerer Clients 1, 2, 3 zu demselben Serverdienst eines Servers 4 in einem Netzwerk mittels einer OPC-UA gemäß dem Stand der Technik. Der Serverdienst stellt den Clients 1, 2, 3 veränderliche Werte einer oder mehrerer Variablen bereit. Um sich zu dem Serverdienst anzumelden, baut jeder Client 1, 2, 3 gemäß der OPC-UA einen als Kommunikationskanal 7.1, 7.2, 7.3 zu dem Server 4 auf und sendet über seinen Kommunikationskanal 7.1, 7.2, 7.3 eine Subscription-Anmeldung 5.1, 5.2, 5.3 (Subscriber-Call) an den Server 4. Jeder Kommunikationskanal 7.1, 7.2, 7.3 ist dabei als eine TCP-Verbindung ausgebildet.

Die Subscription-Anmeldung 5.1, 5.2, 5.3 definiert den angefragten Serverdienst, indem sie die Variablen, an deren Wertänderungen der Client 1, 2, 3 interessiert ist, und eine Updaterate, die ein gewünschtes Zeitintervall zwischen Aktualisierungen der Werte dieser Variablen angibt, enthält. Dazu ruft die Subscription-Anmeldung 5.1, 5.2, 5.3 die Methode CreateSubscription bei dem Server 4 auf und gibt als Argumente der Methode die Variablen und die Updaterate an. Für die drei Variablen var1, var2, var3 und eine Updaterate von 250 ms enthält die Subscription-Anmeldung 5.1, 5.2, 5.3 beispielsweise den Methodenaufruf CreateSubscription(var1, var2, var3, 250ms).

In Figur 1 ist dies in größerem Detail für einen ersten Client 1 dargestellt. Eine Applikation 1.1 des ersten Client 1 erzeugt die Anforderung der Subscription-Anmeldung 5.1 des ersten Client 1 und übergibt sie einem OPC-UA Kommunikationsstack 1.2 des ersten Client 1, der die Subscription-Anmeldung 5.1 dann an den Server 4 sendet. Entsprechend werden die Subscription-Anmeldungen 5.2, 5.3 der anderen Clients 2, 3 erzeugt und versendet.

Der Server 4 empfängt die Subscription-Anmeldungen 5.1, 5.2, 5.3 der Clients 1, 2, 3 über einen Server-Stack 4.1, legt für jeden sich derart an dem Serverdienst anmeldenden Client 1, 2, 3 eine separate Subscription-Struktur S1, S2, S3 an und verwaltet diese. Mit den Subscription-Strukturen S1, S2, S3 erzeugt der Server 4 für jeden sich an dem Serverdienst anmeldenden Client 1, 2, 3 eine separate Subscription-ID für den Serverdienst und sendet diese über den jeweiligen Kommunikationskanal 7.1, 7.2, 7.3 mittels einer separaten Subscription-Benachrichtigung 6.1, 6.2, 6.3 (Subscriber Response) an den jeweiligen Client 1, 2, 3.

Wie in Figur 1 wiederum am Beispiel des ersten Client 1 dargestellt ist, empfängt der OPC-UA Kommunikationsstack 1.2 des ersten Client 1 die an den ersten Client 1 gesendete Subscription-Benachrichtigung 6.1 des Servers 4 und übergibt der Applikation 1.1 des ersten Client 1, die die Subscription-Anmeldung 5.1 angefordert hat, die in der Subscription-Benachrichtigung 6.1 enthaltene Subscription-ID. Entsprechendes gilt für die weiteren sich für den Serverdienst anmeldenden Clients 2, 3.

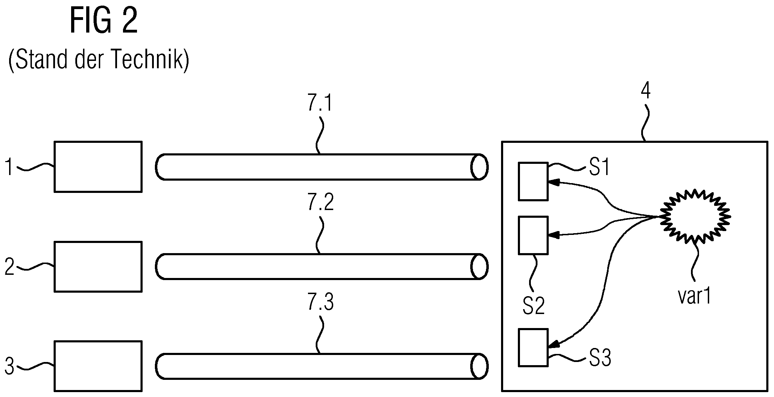

Figur 2 zeigt beispielhaft eine Mitteilung einer Wertänderung einer Variable var1 des Serverdienstes an zu dem Serverdienst angemeldete Clients 1, 2, 3 mittels einer OPC-UA gemäß dem Stand der Technik. Der Server 4 ermittelt die von der Wertänderung betroffenen Subscription-Strukturen S1, S2, S3 und sendet jedem Client 1, 2, 3 einer ermittelten betroffenen Subscription-Struktur S1, S2, S3 über den jeweiligen Kommunikationskanal 7.1, 7.2, 7.3 eine separate TCP-Wertänderungsnachricht (Subscriber-Publish), die dem Client 1, 2, 3 die Wertänderung der ersten Variable var1 mitteilt.

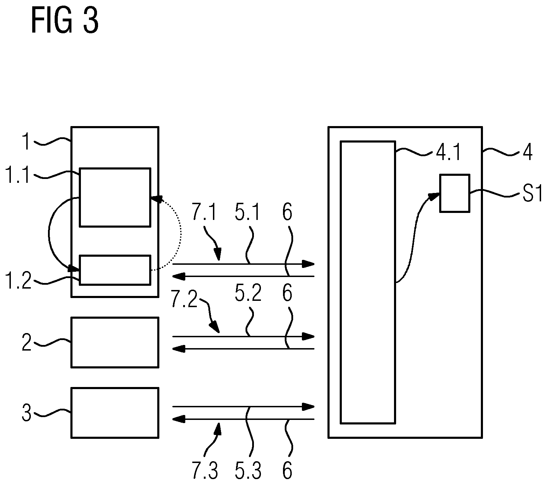

Figur 3 zeigt eine Anmeldung mehrerer Clients 1, 2, 3 zu demselben Serverdienst eines Servers 4 in einem Netzwerk mittels einer OPC-UA gemäß dem erfindungsgemäßen Verfahren. Wie bei dem anhand der Figuren 1 und 2 beschriebenen herkömmlichen Verfahren stellt der Serverdienst den Clients 1, 2, 3 veränderliche Werte einer oder mehrerer Variablen bereit. Um sich zu dem Serverdienst anzumelden, baut jeder Client 1, 2, 3 wiederum gemäß der OPC-UA einen als TCP-Verbindung ausgebildeten Kommunikationskanal 7.1, 7.2, 7.3 zu dem Server 4 auf und sendet über seinen Kommunikationskanal 7.1, 7.2, 7.3 eine Subscription-Anmeldung 5.1, 5.2, 5.3 (Subscriber-Call) an den Server 4.

Die Subscription-Anmeldung 5.1, 5.2, 5.3 definiert ebenso wie bei dem herkömmlichen Verfahren den angefragten Serverdienst, indem sie die Variablen, an deren Wertänderungen der Client 1, 2, 3 interessiert ist, und eine Updaterate, die ein gewünschtes Zeitintervall zwischen Aktualisierungen der Werte dieser Variablen angibt, enthält. Dazu ruft die Subscription-Anmeldung 5.1, 5.2, 5.3 die Methode CreateSubscription bei dem Server 4 auf und gibt als Argumente der Methode die Variablen und die Updaterate an. Für die drei Variablen var1, var2, var3 und eine Updaterate von 250 ms enthält die Subscription-Anmeldung 5.1, 5.2, 5.3 beispielsweise wiederum den Methodenaufruf CreateSubscription(var1, var2, var3, 250ms).

In Figur 3 ist dies in größerem Detail für einen ersten Client 1 dargestellt. Eine Applikation 1.1 des ersten Client 1 erzeugt eine Anforderung der Subscription-Anmeldung 5.1 des ersten Client 1 und übergibt sie einem OPC-UA Kommunikationsstack 1.2 des ersten Client 1. Im Unterschied zum herkömmlichen Verfahren fügt der OPC-UA Kommunikationsstack 1.2 des ersten Client 1 der Subscription-Anmeldung 5.1 ein Datum hinzu, das den ersten Client 1 als einen Client 1, 2, 3 ausweist, der Multicast-Subscriptions unterstützt, und sendet dieses Datum zusammen mit der Subscription-Anmeldung 5.1 dann an den Server 4. Entsprechend werden die Subscription-Anmeldungen 5.2, 5.3 der anderen Clients 2, 3 erzeugt, um ein Datum ergänzt, das die Unterstützung von Multicast-Subscriptions des jeweiligen Client 2, 3 ausweist, und an den Server 4 gesendet.

Der Server 4 empfängt die Subscription-Anmeldungen 5.1, 5.2, 5.3 der Clients 1, 2, 3 über einen Server-Stack 4.1. Nach dem erstmaligen Empfangen einer Subscription-Anmeldung 5.1, 5.2, 5.3 für den Serverdienst erkennt der Server 4 anhand des die Unterstützung von Multicast-Subscriptions ausweisenden Datums die erweiterte Funktionalität des die Subscription-Anmeldung 5.1, 5.2, 5.3 sendenden Client 1, 2, 3, legt daraufhin eine Subscription-Struktur S1 mit einer eindeutigen Subscription-ID für den Serverdienst und eine dieser zugeordnete TCP/IP-Multicastgruppe 9 mit einer eindeutigen Multicastadresse an und sendet diese Subscription-ID und Multicastadresse mittels einer Subscription-Benachrichtigung 6 (Subscriber Response) an den sich anmeldenden Client 1, 2, 3 über dessen Kommunikationskanal 7.1, 7.2, 7.3 zum Server 4.

Wenn der Server 4 weitere Subscription-Anmeldungen 5.1, 5.2, 5.3 für denselben Serverdienst empfängt, erzeugt er keine weitere Subscription-Struktur S1, S2, S3, sondern teilt die Subscription-ID der bereits angelegten Subscription-Struktur S1 und die Multicastadresse der zugeordneten Multicastgruppe 9 jedem weiteren sich für den Serverdienst anmeldenden Client 1, 2, 3 über den jeweiligen Kommunikationskanal 7.1, 7.2, 7.3 mittels einer Subscription-Benachrichtigung 6 mit.

Im Unterschied zum herkömmlichen Verfahren erzeugt der Server 4 also bei dem erfindungsgemäßen Verfahren nur eine einzige Subscription-Struktur S1 für den Serverdienst und legt für die sich für den Serverdienst anmeldenden Clients 1, 2, 3 eine Multicastgruppe 9 an. Die an die Clients 1, 2, 3 gesendeten Subscription-Benachrichtigungen 6 enthalten somit alle dieselbe Subscription-ID zur Identifizierung des Serverdienstes bzw. der Subscription-Struktur S1 und dieselbe Multicastadresse der zugeordneten Multicastgruppe 9.

Wie in Figur 3 am Beispiel des ersten Client 1 dargestellt ist, empfängt der OPC-UA Kommunikationsstack 1.2 des ersten Client 1 die an den ersten Client 1 gesendete Subscription-Benachrichtigung 6 des Servers 4 und übergibt der Applikation 1.1 des ersten Client 1, die die Subscription-Anmeldung 5.1 angefordert hat, die in der Subscription-Benachrichtigung 6 enthaltene Subscription-ID. Die Multicastadresse wird der Applikation 1.1 dagegen nicht mitgeteilt, d.h. für die Applikation 1.1 bleibt verborgen, dass nur eine Subscription-Struktur S1 erzeugt wird. Für die Applikation 1.1 gibt es daher keinen Unterschied zwischen dem herkömmlichen und dem erfindungsgemäßen Subscription-Verfahren, so dass sie bei Verwendung des erfindungsgemäßen Subscription-Verfahrens gegenüber dem herkömmlichen Subscription-Verfahren in keiner Weise geändert werden muss. Entsprechendes gilt für die weiteren sich für den Serverdienst anmeldenden Clients 2, 3.

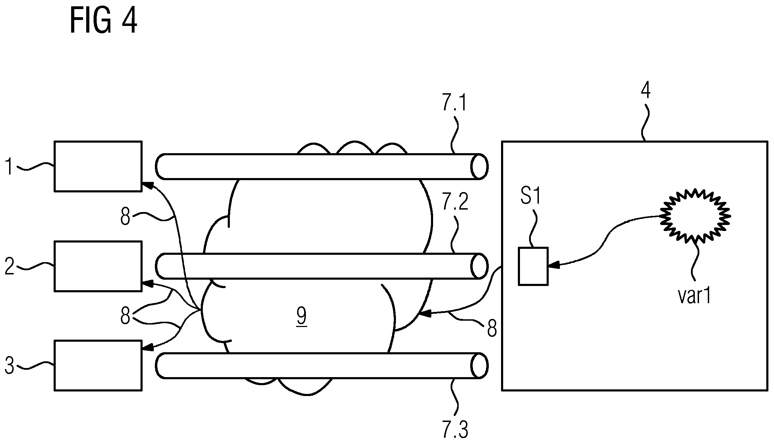

Figur 4 zeigt eine Mitteilung einer Wertänderung einer Variable var1 an zu einem Serverdienst angemeldete Clients in einem Netzwerk mittels einer OPC-UA gemäß dem erfindungsgemäßen Verfahren.

Der Server 4 ermittelt die von der Wertänderung betroffenen Subscription-Strukturen S1, wobei in diesem Beispiel nur eine Subscription-Struktur S1 betroffen ist. Für jede ermittelte betroffene Subscription-Struktur S1 erzeugt der Server 4 genau eine Multicastnachricht 8 (Subscriber-Publish), die die Wertänderung der Variable var1 enthält und als UDP-Telegramm ausgebildet ist. Diese Multicastnachricht 8 wird an die Multicastadresse derjenigen Multicastgruppe 9 gesendet, die der jeweiligen Subscription-Struktur S1 zugeordnet ist, so dass alle dieser Multicastgruppe 9 angehörenden Clients 1, 2, 3 dieselbe Multicastnachricht 8 empfangen.

Eine Wertänderung der Variable var1 wird also durch eine einzige Multicastnachricht 8 an alle zu dem Serverdienst angemeldeten Clients 1, 2, 3 gesendet, während der Server 4 bei dem herkömmlichen Verfahren an jeden zu dem Serverdienst angemeldeten Client 1, 2, 3 eine separate TCP-Wertänderungsnachricht sendet.

Obwohl die Erfindung im Detail durch ein bevorzugtes Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1, 2, 3: Client
- 1.1: Applikation
- 1.2: OPC-UA Kommunikationsstack
- 4: Server
- 4.1: Server-Stack
- 5.1, 5.2, 5.3: Subscription-Anmeldung
- 6, 6.1, 6.2, 6.3: Subscription-Benachrichtigung
- 7.1, 7.2, 7.3: Kommunikationskanal
- 8: Multicastnachricht
- 9: Multicastgruppe
- S1 S2, S3: Subscription-Struktur
- var1: Variable

## Patentansprüche

1. Verfahren zum Zugriff von Clients (1, 2, 3) auf einen Sehrverdienst eines Servers (4) in einem Netzwerk mittels einer OPC-UA, wobei
- der Serverdienst den Clients (1, 2, 3) veränderliche Werte wenigstens einer Variable (var1) bereitstellt,
- ein Client (1, 2, 3) sich für den Serverdienst anmeldet, indem er eine Subscription-Anmeldung (5.1, 5.2, 5.3) für den Serverdienst an den Server (4) sendet,
- der Server (4) für den Serverdienst eine Subscription-Struktur (S1, S2, S3) mit einer eindeutigen Subscription-ID und eine dieser Subscription-Struktur (S1, S2, S3) zugeordnete TCP/IP-Multicastgruppe (9) mit einer eindeutigen Multicastadresse anlegt,
- der Server (4) jedem sich durch eine Subscription-Anmeldung (5.1, 5.2, 5.3) für den Serverdienst anmeldenden Client (1, 2, 3) die Multicastadresse und die Subscription-ID mitteilt und
- der Server (4) jede Wertänderung des Wertes jeder Variable (var1) des Serverdienstes mittels einer Multicastnachricht (8) über das Netzwerk an die Multicastadresse sendet, so dass alle für den Serverdienst angemeldeten Clients (1, 2, 3) dieselbe Multicastnachricht (8) empfangen
**dadurch gekennzeichnet, dass** zur Anmeldung eines Client (1, 2, 3) für den Serverdienst der OPC-UA Kommunikationsstack (1.2) des Client (1, 2, 3) in die zum Server (4) gesendeten Anmeldedaten ein Datum einfügt, das den Client (1, 2, 3) als Multicast-Subscriptions unterstützenden Client (1, 2, 3) ausweist.

2. Verfahren nach Anspruch 1,
**dadurch gekennzeichnet, dass** die von dem Server (4) gesendeten Multicastnachrichten (8) UDP-Telegramme sind.

3. Verfahren nach einem der vorhergehenden Ansprüche,
**dadurch gekennzeichnet, dass** der Server (4) die Subscription-Struktur (S1, S2, S3) und die TCP/IP-Multicastgruppe (9) nach dem erstmaligen Empfangen einer Subscription-Anmeldung (5.1, 5.2, 5.3) für den Serverdienst erzeugt.

4. Verfahren nach einem der vorhergehenden Ansprüche,
**dadurch gekennzeichnet, dass** der Server (4) nach dem Erhalt einer Subscription-Anmeldung (5.1, 5.2, 5.3) eines Client (1, 2, 3) für den Serverdienst überprüft, ob für den Serverdienst bereits eine Subscription-Struktur (S1, S2, S3) existiert, und eine Subscription-Struktur (S1, S2, S3) für den Serverdienst nur in dem Falle anlegt, dass noch keine Subscription-Struktur (S1, S2, S3) für den Serverdienst existiert.

5. Verfahren nach einem der vorhergehenden Ansprüche,
**dadurch gekennzeichnet, dass** die Multicastnachricht (8) mehrfach von dem Server (4) gesendet wird.

6. Verfahren nach einem der vorhergehenden Ansprüche,
**dadurch gekennzeichnet, dass** die Menge der Variablen (var1) des Serverdienstes vom Server (4) als Vereinigungsmenge aus Variablen (var1) gebildet wird, die in von dem Server (4) empfangenen Subscription-Anmeldungen (5.1, 5.2, 5.3) verschiedener Clients (1, 2, 3) enthalten sind.

7. Client (1, 2, 3) zur Durchführung des Verfahrens nach einem der vorhergehenden Ansprüche, wobei der Client (1, 2, 3) einen OPC-UA Kommunikationsstack (1.2) aufweist, der Dazu ausgebildet ist, in zum Server (4) gesendete Anmeldedaten zur Anmeldung des Client (1, 2, 3) für den Serverdienst ein Datum einzufügen, das den Client (1, 2, 3) als Multicast-Subscriptions unterstützenden Client (1, 2, 3) ausweist.

8. Server (4) zur Durchführung des Verfahrens nach einem der Ansprüche 1 bis 6, wobei der Server (4) einen OPC-UA Serverstack (4.1) aufweist, der dazu ausgebildet ist, für den Serverdienst eine Subscription-Struktur (S1, S2, S3) mit einer eindeutigen Subscription-ID und eine dieser Subscription-Struktur (S1, S2, S3) zugeordnete TCP/IP-Multicastgruppe (9) mit einer eindeutigen Multicastadresse anzulegen, jedem sich durch eine Subscription-Anmeldung (5.1, 5.2, 5.3) für den Serverdienst anmeldenden Client (1, 2, 3) die Multicastadresse und die Subscription-ID mitzuteilen und jede Wertänderung des Wertes jeder Variablen (var1) des Serverdienstes mittels einer Multicastnachricht (8) über das Netzwerk an die Multicastadresse zu senden.

9. Netzwerk zur Durchführung des Verfahrens nach einem der Ansprüche 1 bis 6, umfassend wenigstens einen Client (1, 2, 3) gemäß Anspruch 7 und wenigstens einen Server (4) gemäß Anspruch 8

## Claims

1. Method for giving clients (1, 2, 3) access to a server service of a server (4) in a network using an OPC-UA, wherein
- the server service provides the clients (1, 2, 3) with varying values of at least one variable (var1),
- a client (1, 2, 3) registers for the server service by transmitting a subscription registration (5.1, 5.2, 5.3) for the server service to the server (4),
- the server (4) creates, for the server service, a subscription structure (S1, S2, S3) having a unique subscription ID and a TCP/IP multicast group (9) which is associated with this subscription structure (S1, S2, S3) and has a unique multicast address,
- the server (4) communicates the multicast address and the subscription ID to each client (1, 2, 3) registering for the server service by means of a subscription registration (5.1, 5.2, 5.3), and
- the server (4) transmits each value change in the value of each variable (var1) of the server service to the multicast address using a multicast message (8) via the network, with the result that all clients (1, 2, 3) registered for the server service receive the same multicast message (8),
**characterized in that**, in order to register a client (1, 2, 3) for the server service, the OPC-UA communication stack (1.2) of the client (1, 2, 3) inserts a data item into the registration data transmitted to the server (4), which data item shows the client (1, 2, 3) to be a client (1, 2, 3) supporting multicast subscriptions.

2. Method according to Claim 1,
**characterized in that** the multicast messages (8) transmitted by the server (4) are UDP messages.

3. Method according to one of the preceding claims,
**characterized in that** the server (4) generates the subscription structure (S1, S2, S3) and the TCP/IP multicast group (9) after receiving a subscription registration (5.1, 5.2, 5.3) for the server service for the first time.

4. Method according to one of the preceding claims,
**characterized in that**, after receiving a subscription registration (5.1, 5.2, 5.3) from a client (1, 2, 3) for the server service, the server (4) checks whether a subscription structure (S1, S2, S3) already exists for the server service and creates a subscription structure (S1, S2, S3) for the server service only if a subscription structure (S1, S2, S3) does not yet exist for the server service.

5. Method according to one of the preceding claims,
**characterized in that** the multicast message (8) is repeatedly transmitted by the server (4).

6. Method according to one of the preceding claims,
**characterized in that** the set of variables (var1) of the server service is formed, by the server (4), as a combination set of variables (var1) which are contained in subscription registrations (5.1, 5.2, 5.3) from different clients (1, 2, 3) which are received by the server (4).

7. Client (1, 2, 3) for carrying out the method according to one of the preceding claims, wherein the client (1, 2, 3) has an OPC-UA communication stack (1.2) which is designed to insert a data item into registration data which are transmitted to the server (4) and are intended to register the client (1, 2, 3) for the server service, which data item shows the client (1, 2, 3) to be a client (1, 2, 3) supporting multicast subscriptions.

8. Server (4) for carrying out the method according to one of Claims 1 to 6, wherein the server (4) has an OPC-UA server stack (4.1) which is designed to create, for the server service, a subscription structure (S1, S2, S3) having a unique subscription ID and a TCP/IP multicast group (9) which is associated with this subscription structure (S1, S2, S3) and has a unique multicast address, to communicate the multicast address and the subscription ID to each client (1, 2, 3) registering for the server service by means of a subscription registration (5.1, 5.2, 5.3), and to transmit each value change in the value of each variable (var1) of the server service to the multicast address using a multicast message (8) via the network.

9. Network for carrying out the method according to one of Claims 1 to 6, comprising at least one client (1, 2, 3) according to Claim 7 and at least one server (4) according to Claim 8.

## Revendications

1. Procédé pour l'accès de clients (1, 2, 3) à un service de serveur d'un serveur (4) dans un réseau par un OPC-UA,
- le service de serveur fournissant aux clients (1, 2, 3) des valeurs variables d'au moins une variable (var1) ;
- un client (1, 2, 3) se connectant au service de serveur par envoi, au serveur (4), d'une demande de souscription (5.1, 5.2, 5.3) au service de serveur ;
- le serveur (4) créant, pour le service de serveur, une structure de souscription (S1, S2, S3) avec un identifiant de souscription univoque et un groupe de multidiffusion TCP/IP (9) avec une adresse de multidiffusion univoque associé à cette structure de souscription (S1, S2, S3) ;
- le serveur (4) communiquant l'adresse de multidiffusion et l'identifiant de souscription à chaque client (1, 2, 3) qui se connecte par une demande de souscription (5.1, 5.2, 5.3) au service de serveur et
- le serveur (4) envoyant à l'adresse de multidiffusion, via le réseau, toute modification de valeur de la valeur de chaque variable (var1) du service de serveur au moyen d'un message de multidiffusion (8), de sorte que tous les clients connectés au service de serveur (1, 2, 3) reçoivent le même message de multidiffusion (8),
**caractérisé en ce que**, pour la connexion d'un client (1, 2, 3) au service de serveur, la pile de communication OPC-UA (1.2) du client (1, 2, 3) insère dans les données de connexion envoyées au serveur (4) une donnée qui identifie le client (1, 2, 3) comme client (1, 2, 3) supportant des souscriptions de multidiffusion.

2. Procédé selon la revendication 1, **caractérisé en ce que** les messages de multidiffusion (8) émis par le serveur (4) sont des télégrammes UDP.

3. Procédé selon l'une des revendications précédentes, **caractérisé en ce que** le serveur (4) génère la structure de souscription (S1, S2, S3) et le groupe de multidiffusion TCP/IP (9) après la première réception d'une demande de souscription (5.1, 5.2, 5.3) au service de serveur.

4. Procédé selon l'une des revendications précédentes, **caractérisé en ce que** le serveur (4) vérifie, après la réception d'une demande de souscription (5.1, 5.2, 5.3) d'un client (1, 2, 3) au service de serveur, s'il existe déjà une structure de souscription (S1, S2, S3) pour le service de serveur et **en ce qu'**il ne crée une structure de souscription (S1, S2, S3) pour le service de serveur que s'il n'existe pas encore de structure de souscription (S1, S2, S3) pour le service de serveur.

5. Procédé selon l'une des revendications précédentes, **caractérisé en ce que** le message de multidiffusion (8) est émis plusieurs fois par le serveur (4).

6. Procédé selon l'une des revendications précédentes, **caractérisé en ce que** l'ensemble des variables (var1) du service de serveur est constitué par le serveur (4) en tant qu'ensemble réunissant des variables (var1) qui sont contenues dans des demandes de souscription (5.1, 5.2, 5.3) de différents clients (1, 2, 3) reçues par le serveur (4).

7. Client (1, 2, 3) pour exécuter le procédé selon l'une des revendications précédentes, le client (1, 2, 3) comportant une pile de communication OPC-UA (1.2) qui est réalisée pour insérer dans des données de connexion envoyées au serveur (4) pour la connexion du client (1, 2, 3) au service de serveur une donnée qui identifie le client (1, 2, 3) comme client (1, 2, 3) supportant des souscriptions de multidiffusion.

8. Serveur (4) pour exécuter le procédé selon l'une des revendications 1 à 6, le serveur (4) comportant une pile de serveur OPC-UA (4.1) qui est réalisée pour créer, pour le service de serveur, une structure de souscription (S1, S2, S3) avec un identifiant de souscription univoque et un groupe de multidiffusion TCP/IP (9) avec une adresse de multidiffusion univoque associé à cette structure de souscription (S1, S2, S3), pour communiquer l'adresse de multidiffusion et l'identifiant de souscription à chaque client (1, 2, 3) qui se connecte au service de serveur par une demande de souscription (5.1, 5.2, 5.3) et pour envoyer à l'adresse de multidiffusion, via le réseau, chaque modification de valeur de la valeur de chaque variable (var1) du service de serveur au moyen d'un message de multidiffusion (8).

9. Réseau pour exécuter le procédé selon l'une des revendications 1 à 6, comprenant au moins un client (1, 2, 3) selon la revendication 7 et au moins un serveur (4) selon la revendication 8.
